# EUROPÄISCHE PATENTSCHRIFT

(11) **EP 3 393 028 B1**
(45) Veröffentlichungstag und Bekanntmachung des Hinweises auf die Patenterteilung: **25.01.2023**
(21) Anmeldenummer: 18168415.0
(22) Anmeldetag: 20.04.2018
(51) Int. Cl.: H02M 1/44, H02M 5/458, H02M 1/15

(54) **WINDENERGIEANLAGE MIT UMRICHTERSYSTEM ZUR VERRINGERUNG VON EM-ABSTRAHLUNG**
WIND TURBINE WITH CONVERTER SYSTEM FOR REDUCING EM RADIATION
ÉOLIENNE POURVUE DE SYSTÈME CONVERTISSEUR PERMETTANT DE RÉDUIRE LE RAYONNEMENT EM

(30) Priorität: 21.04.2017 DE 102017003877
(43) Veröffentlichungstag der Anmeldung: 24.10.2018
(73) Patentinhaber: Siemens Gamesa Renewable Energy Service GmbH, 20097 Hamburg (DE)
(72) Erfinder: Letas, Heinz-Hermann, 24796 Bovenau (DE)
(74) Vertreter: Glawe, Delfs, Moll

(56) Entgegenhaltungen:
- EP-A1- 2 262 089
- EP-A2- 1 796 254
- EP-A2- 2 141 790
- EP-A2- 2 466 737
- CHIVITE-ZABALZA JAVIER ET AL: "Comparison of power conversion topologies for a multi-megawatt off-shore wind turbine, based on commercial Power Electronic Building Blocks", IECON 2013 - 39TH ANNUAL CONFERENCE OF THE IEEE INDUSTRIAL ELECTRONICS SOCIETY, IEEE, 10. November 2013 (2013-11-10), Seiten 5242-5247, XP032539002, ISSN: 1553-572X, DOI: 10.1109/IECON.2013.6699987 [gefunden am 2013-12-30]

## Beschreibung

Die Erfindung betrifft eine Windenergieanlage mit einem Windrotor, einem damit angetriebenen Generator, der mit einer Umrichteranlage zusammenwirkt zur Erzeugung elektrischer Leistung, welche über eine Netzanschlussleitung abgegeben wird. Die Umrichteranlage umfasst mindestens zwei parallel geschaltete Umrichter, die paarig zusammengeschaltet sind und von einer Umrichtersteuerung angesteuert sind.

Moderne Windenergieanlagen sind mit Umrichtern versehen, um einen drehzahlvariablen Betrieb zu ermöglichen und immer strikter werdenden Anforderungen der Netzbetreiber hinsichtlich Systemdienstleistungen (bspw. Bereitstellung von Blindleistung nach Anforderung des Netzbetreibers) erfüllen zu können. Derartige Umrichter umfassen üblicherweise zwei Wechselrichter, von denen einer mit dem Generator verbunden ist und der andere an das Netz angeschlossen ist; beide Wechselrichter sind über einen Gleichspannungs- oder Gleichstromzwischenkreis verbunden. Grundsätzlich ist es so, dass derartige Umrichter zumindest dann, wenn sie in der verbreiteten Bauart als Pulswechselrichter ausgeführt sind, mindestens eine Induktivität zur Glättung der Ströme benötigen. Bei dem maschinenseitigen Wechselrichter des Umrichters wird hierzu im Regelfall die im Generator stets vorhandene Induktivität der Generatorwicklung genutzt. Dies ist zwar effizient, bedeutet aber auch, dass in der Verbindungsleitung zwischen dem maschinenseitigen Wechselrichter und Generator gepulste (und nicht sinusförmige) Spannungen auftreten. Meist sind es getaktete rechteckförmige Spannungen.

Dies kann zu Problemen führen, wenn die in der Praxis häufig recht langen Verbindungsleitungen zwischen Generator und Umrichter hohe Kapazitäten aufweisen. Dies ist vor allem dann der Fall, wenn die Leitungen in an sich wünschenswerter Weise mit Schirmung versehen sind. Da sie dann eine Kapazität gegen die Schirmung (Masse) aufweisen, kommt es zu recht hohen Ableitströmen. Insoweit wirken die Kapazitäten der geschirmten Leitungen parasitär. Das Massesystem der Windenergieanlage wird dadurch mit Potentialausgleichströmen belastet. Im Normalbetrieb soll das Massesystem aber an sich nicht stromführend sein. Indem es aber - wie vorstehend beschrieben - unweigerlich zu Ableitströmen führt, entsteht somit wegen der permanenten Stromführung zum einen ein Sicherheitsproblem und zum anderen eine massive Abstrahlproblematik, da das Massesystem somit zu einem unerwünschten "Störsender" wird und erhebliche EMV-Probleme hervorruft (die es an sich beheben soll).

Diese Problematik tritt insbesondere bei großen Windenergieanlagen mit hoher Leistung auf, da hierbei die Kabelwege lang sind und die Umrichter häufig fern der Gondel angeordnet sind (bspw. unten im Turm oder am Turmfuß). Abhilfe durch kurze Kabelwege ist somit aus praktischen Gründen meist nicht möglich.

Zur Abhilfe sind verschiedene konstruktive Maßnahmen vorgeschlagen worden. So können speziell konstruierte Stromschienen mit verringerter Kapazität (bspw. vom Typ Siemens LDA oder LDM) für die Verbindungsleitung zwischen Umrichter und Generator verwendet werden. Diese sind jedoch unflexibel und kostenträchtig. Eine Alternative liegt in dem genauen Gegenteil, nämlich einfache, ungeschirmte Verbindungsleitungen zu verwenden. Dies ist zwar kostengünstig, aber infolge des Wegfalls der Schirmung entsteht ein anderes EMV-Problem. Auch dieser Weg ist also nicht zielführend. Schließlich kann noch vorgesehen sein, das gesamte Erdungssystem der Windenergieanlage zu ändern. Dies deutet eine erhebliche Umkonstruktion und kann daher praktisch nur bei von Grund auf neu konstruierten Windenergieanlage-Typen vorgesehen werden, was unpraktisch ist. Für die Verbesserung bestehender Anlagetypen eignet sich dieser Ansatz nicht. Aber unabhängig davon verursacht dieser Ansatz erheblichen Mehraufwand, so werden zum Beispiel zusätzlich Trenntransformatoren für den Eigenbedarf erforderlich. Ferner ist aus der US 2014/021937 A1 eine Windenergieanlage mit zwei parallelen Umrichtern bekannt. Durch die Parallelschaltung können störende Kreisströme auftreten. Zu deren Verringerung ist ein Interphase-Transformator vorzugsweise generatorseitig angeordnet. Speziell zur Vermeidung von EM-Abstrahlungen lehrt das Dokument nichts.

EP 2 141 790 A2 offenbart eine Windenergieanlage mit mehreren parallel geschalteten Umrichtersträngen und einer Umrichtersteuerung, die ausgebildet ist, Oberschwingungen in der Ausgangsleistung oder der Wechselstromeingangsleistung zu reduzieren. Zudem sind Isolierungsmittel zwischen dem Umrichter und dem Transformator vorgesehen, um die Verbreitung von Gleichtaktströmen zu verhindern.

Auch EP 1 796 254 A2 offenbart ein Umrichtersystem und ein entsprechendes Verfahren mit einer Umrichtersteuerung, die das Umrichtersystem in verschachtelten Mustern ("interleaved pattern") ansteuert, um Oberschwingungen in der Ausgangsleistung oder der Wechselstromeingangsleistung zu reduzieren.

Der Artikel "Comparison of power conversion topologies for a multi-megawatt off-shore wind turbine, based on commercial Power Electronic Building Blocks" offenbart ebenfalls ein Ansteuern des Umrichters mit einer verschachtelten Modulation ("interleaved modulation").

EP 2 466 737 A2 offenbart einen Generator für eine Windenergieanlage. Auch in diesem Dokument ist das verschachtelte ("interleaved") Schalten der Umrichter offenbart, um eine Reduzierung der Oberschwingungen zu erreichen.

Es besteht daher Bedarf, auf weniger aufwendige Weise das EMV-Abstrahlverhalten der Anschlussleitungen der Umrichter zu verbessern.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem damit angetriebenen Generator, der mit einer Umrichteranlage zusammenwirkt zur Erzeugung elektrischer Leistung, welche über eine Anschlussleitung abgegeben wird, wobei ein maschinenseitiges Ende der Umrichteranlage an den Generator angeschlossen ist, und ein netzseitiges Ende der Umrichteranlage an die Netzanschlussleitung mit einem Anlagentransformator angeschlossen ist, wobei die Umrichteranlage mindestens zwei parallel geschaltete Umrichter umfasst, die paarig zusammengeschaltet sind und von einer Umrichtersteuerung angesteuert sind, ist erfindungsgemäß vorgesehen, dass die parallel geschalteten Umrichter jeweils in einem eigenen Strang eines Strangpaars angeordnet sind, und die Umrichter des Strangpaars mit relativ zueinander inverser Polarität angesteuert sind.

Die Erfindung beruht auf dem Gedanken, den herkömmlichen Leistungsfluss-Strang vom Generator über den Umrichter zum Anlagentransformator zu ersetzen durch eine als Strangpaar ausgeführte Parallelstruktur, wobei die beiden Stränge im Strangpaar jeweils einen eigenen Umrichter aufweisen, also strukturell praktisch identisch sind. Jedoch werden, und das ist der Schlüssel zur Erfindung, die beiden in Parallelstruktur angeordneten Umrichter invers zueinander angesteuert, nämlich mit invertierter Polarität.

Durch diese Kombination aus struktureller Identität und funktionaler Inversität werden überragende Vorteile erzielt, und zwar bei geringem Mehraufwand. Denn leistungsstarke Windenergieanlagen sind häufig bereits ohnehin mit mehr als einem Umrichter ausgerüstet, so dass insoweit keine zusätzlich für die Erfindung benötigt werden, sondern nur etwas zusätzlicher Beschaltungsaufwand erforderlich wird.

Dank dieser besonderen Kombination erreicht die Erfindung eine beträchtliche Verringerung der durch Gleichtaktspannungen der Umrichteranlage hervorgerufenen Ströme. Diese werden nicht mehr wie im Stand der Technik in das Massesystem eingespeist, sondern kompensieren sich. Denn dank der inversen Beschaltung der Umrichter sind die in den beiden Strängen des Strangpaars erzeugten Gleichtaktströme genau gegensinnig. Das hat zur Folge, dass der Gleichtaktstrom des einen Strangs jetzt nicht mehr (über die Schirmung) in das Massesystem abgegeben wird, sondern in den anderen Strang des Strangpaars abgegeben wird. Das Massesystem wird somit erfindungsgemäß durch diese Kompensation wirksam vom Gleichtaktstrom befreit, dass es so nicht mehr elektromagnetische (EM-) Felder abstrahlt.

Vorzugsweise ist jeder Strang des Strangpaars an eigene Wicklungen in dem Generator angeschlossen und vorzugsweise auch an eigene Wicklungen in dem Anlagentransformator, wobei die eigenen Wicklungen des einen Strangs des Strangpaars um 180° versetzt angeordnet sind zu denen des anderen Strangs des Strangpaars. Da bei den Generatoren der Windenergieanlage in der Regel ohnehin mehrere Spulenpaare vorhanden sind, ist dies ohne Mehraufwand am Generator möglich. Auch bei dem Transformator ist häufig eine doppelte Niederspannungswicklung bereits aus anderen Gründen vorhanden (beispielsweise zur Verringerung der Kurzschlussströme). Besonders zweckmäßig ist es, wenn die Umrichter des Strangpaars voneinander isoliert sind. Insbesondere soll eine Verschaltung der Zwischenkreise der beiden Umrichter vermieden werden. Damit wird eine praktisch vollständige Entkopplung der beiden Stränge des Strangpaars erreicht.

Vorteilhafterweise werden die beiden Umrichter des Strangpaars synchron (aber mit besagter inverser Polarität) angesteuert, und zwar vorzugsweise sowohl zeit- wie auch phasensynchron. Dies sichert eine maximale Kompensierung der Gleichtaktströme zwischen den beiden Strängen des Strangpaars.

Vorzugsweise ist die Umrichteranlage als Vollumrichter ausgeführt, wobei weiter vorzugsweise die Umrichteranlage an Statorwicklungen des Generators angeschlossen ist. Die Ausführung als Vollumrichter bedeutet, dass die gesamte von dem Generator erzeugte elektrische Leistung durch die Umrichteranlage geführt ist. Diese Ausführungsform bietet sich insbesondere an für einen Betrieb mit einem Synchron- oder Asynchrongenerator (Käfigläufer oder mittels Permanentmagnet erregt). Es soll aber nicht ausgeschlossen sein, dass die Umrichteranlage als Teilumrichter ausgeführt ist. Diese Ausführung bietet sich insbesondere an für einen Betrieb mit einer doppelt gespeisten Asynchronmaschine als Generator.

Zweckmäßigerweise sind die Umrichter des Strangpaars voneinander isoliert. Das bedeutet, dass die Umrichter nicht miteinander verbunden sind, d.h. das unter anderem auch die Zwischenkreise der beiden Umrichter nicht miteinander verbunden sind. Damit wird erreicht, dass die beiden Umrichter auf unterschiedlichen absoluten Potenzialen liegen können, was zu der erwünschten Reduktion von Gleichtakt-Spannungen und dadurch induzierter EM-Abstrahlung führt.

Vorzugsweise ist eine Invertiereinheit vorgesehen, die eine inverse Ansteuerleitung bereitstellt, die an nur einem der beiden Umrichter des Strangpaars eingeschleift ist. Damit kann auf besonders einfache und zweckmäßige Weise das für die Ansteuerung des zweiten Umrichters benötigte Signal mit invertierter Polarität gewonnen werden. Die Invertiereinheit stellt somit synchron ein Ansteuersignal mit inverser Polarität bereit. Es versteht sich, dass die Invertiereinheit nur auf genau einen der beiden Umrichter des Strangpaars wirkt. Denn würde sie auf beide Umrichter wirken, so wären die beiden Umrichter wiederum mit gleicher Polarität und nicht mit verschiedener angesteuert. Mit Vorteil ist die Invertiereinheit in die ansonsten herkömmliche Umrichtersteuerung integriert.

Zweckmäßigerweise sind die Wicklungen, an denen einer der Stränge des Strangpaars angeschlossen ist, phasenversetzt angeordnet zu den Wicklungen des anderen Strangs dieses Strangpaars. Besonders zweckmäßig ist ein Phasenversatz um 180°. Auf diese Weise kann das Strangpaar mit dem Umrichter, der mit inverser Polarität angesteuert ist, ohne weitere Maßnahmen direkt an die Wicklungen des Transformators bzw. des Generators angeschlossen sein. Es ergibt sich somit ein einfacher Aufbau unter Wahrung der erforderlichen elektrischen Parameter, insbesondere der Phasenlage. Mit Vorteil ist der Anlagentransformator unterspannungsseitig vom Typ yn5 und yn11 oder äquivalent ausgeführt.

Besonders bevorzugt ist es, abgeschirmte Kabel zur Verbindung der Umrichter mit dem Generator vorzusehen. Damit ergibt sich eine beträchtliche Verringerung der unerwünschten elektromagnetischen Abstrahlung bereits durch die Schirmung. Besonders zweckmäßig ist in all den Fällen, in denen die Umrichter fern der Gondel angeordnet sind, und zwar insbesondere im unteren Bereich des Turms. Denn bei modernen Windenergieanlagen sind die Turmhöhen so groß, dass sie im Turm laufende Kabel mit einer Länge von etwa 100 m erfordern. Ungeschirmte Kabel würden hier zu beträchtlicher Abstrahlung führen. Durch die Verwendung abgeschirmter Kabel kann diese Abstrahlung vermieden werden, wobei dank der Erfindung die dann an sich auftretende Belastung des Massesystems der Windenergieanlage wirksam verringert ist.

Zweckmäßigerweise sind zwischen den Strängen Masseanschlüsse zur Erdung gebildet. Vorzugsweise ist am Anschluss des Anlagentransformators und/oder des Generators vorgesehen. Diese Anschlüsse sind vorzugsweise symmetrisch zwischen den Strängen ausgeführt. Damit ergibt sich eine einfache und wirksame Erdung des Massepotenzials unter Beibehaltung günstiger EM-Abstrahlcharakteristik.

Im Grundsatz genügt für die Erfindung ein Strangpaar mit zwei Strängen mit jeweils einem eigenen Umrichter, wobei einer der Umrichter mit inverser Polarität angesteuert ist. Jedoch ist es nicht ausgeschlossen, dass zusätzliche Strangpaare vorgesehen sind (die dann wiederum jeweils zwei Stränge mit eigenen, invers angesteuerten Umrichtern enthalten). Auf diese Weise kann die Erfindung auch bei sehr großen Windenergieanlagen Anwendung finden, deren Leistung so hoch ist, dass die Umrichteranlage eine Vielzahl von Umrichtern umfasst.

Die Erfindung erstreckt sich ferner auf ein entsprechendes Verfahren zum Betreiben einer Windenergieanlage mit einem Windrotor, einem damit angetriebenen Generator, der mit einer Umrichteranlage zusammenwirkt zur Erzeugung elektrischer Leistung, welche über eine Anschlussleitung abgegeben wird, wobei ein maschinenseitiges Ende der Umrichteranlage an den Generator angeschlossen ist, und ein netzseitiges Ende der Umrichteranlage an die Netzanschlussleitung mit einem Anlagentransformator angeschlossen ist, wobei die Umrichteranlage mindestens zwei parallel geschaltete Umrichter umfasst, die paarig zusammengeschaltet sind und von einer Umrichtersteuerung angesteuert werden, wobei erfindungsgemäß vorgesehen sind paariges Zusammenfassen von den parallel geschalteten Umrichtern zu mindestens einem Strangpaar, und Ansteuern der Umrichter des Strangpaars mit inverser Polarität.

Zur näheren Erläuterung des erfindungsgemäßen Verfahrens wird auf vorstehende Beschreibung verwiesen.

Die Erfindung wird nachfolgend unter Bezugnahme auf die beigefügte Zeichnung anhand eines Beispiels näher erläutert. In der Zeichnung zeigen:
- Fig. 1:: eine Übersichtsdarstellung für ein Ausführungsbeispiel einer erfindungsgemäßen Windenergieanlage;
- Fig. 2:: einen schematisierten Stromlaufplan für Generator und Umrichteranlage mit zwei Strängen einer solchen Windenergieanlage;
- Fig. 3a, b:: Darstellungen zu der Wicklungsanordnung für die zwei Stränge;
- Fig. 4:: Schemadiagramme darstellend die Ansteuerung der Umrichter mit inverser Polarität;
- Fig. 5a, b: Diagramme zu einem Gleichtaktstrom ohne und mit der erfindungsgemäßen Kompensation; und
- Fig. 6:: einen schematisierten Stromlaufplan für eine Windenergieanlage gemäß dem Stand der Technik.

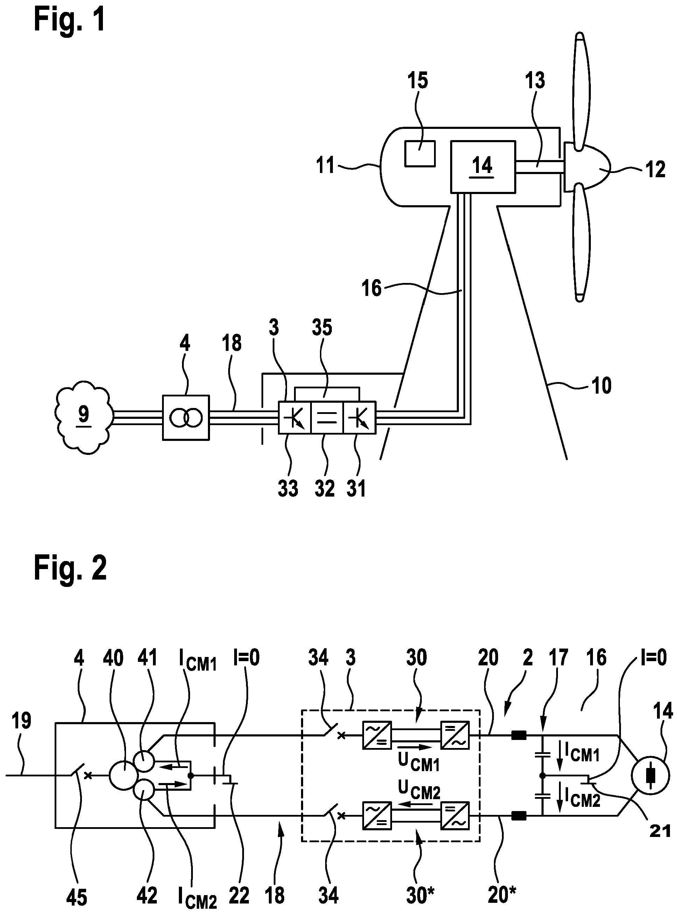

Ein Ausführungsbeispiel für eine Windenergieanlage 1 gemäß der Erfindung ist in Fig. 1 dargestellt. Sie umfasst einen Turm 10, auf dem eine in Azimutrichtung schwenkbare Gondel 11 befestigt ist. An ihrer einen Stirnseite ist ein Windrotor 12 drehbar angeordnet. Er umfasst eine Nabe mit einem oder mit mehreren Rotorblättern und treibt über eine Rotorwelle 13 (und optional über ein nicht dargestelltes Getriebe) einen Generator 14 an. Dieser wandelt die vom Windrotor 12 aus dem Wind erzeugte mechanische Leistung in elektrische Leistung um. Bei dem Generator 14 handelt es sich um einen Synchron- oder Asynchrongenerator, es können aber auch andere Generatorbauarten vorgesehen sein. Ferner ist in der Gondel 11 eine Betriebssteuerung 15 angeordnet, welche den Betrieb der gesamten Windenergieanlage 1 überwacht.

An dem Generator 14 ist über eine Verbindungsleitung 16 mit kapazitiver Reaktanz 17 an eine Umrichteranlage 3 angeschlossen, die im Fuß des Turms 10 angeordnet ist. Die Umrichteranlage 3 weist funktional gesehen drei Sektionen auf, einen maschinenseitigen Wechselrichter 31, einen Zwischenkreis 32 sowie einen netzseitigen Wechselrichter 33. Die Umrichteranlage 3 gibt die elektrische Leistung über eine Anschlussleitung 18 an einen Anlagentransformator 4 an. Dieser wiederum ist über eine Leitung 19 an ein Netz 9 angeschlossen und gibt elektrische Leistung an dieses ab.

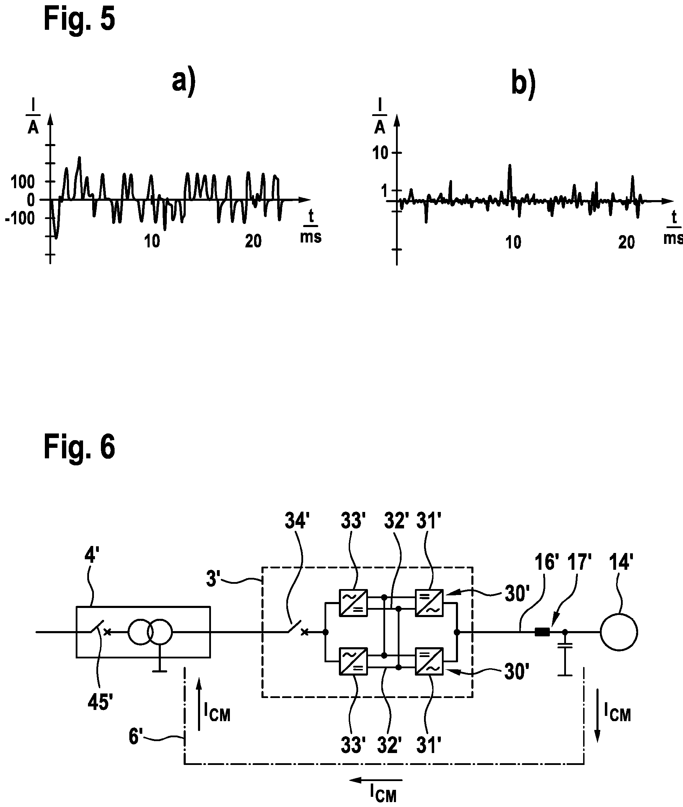

Zur Erläuterung des Grundprinzips wird nunmehr Bezug genommen auf eine Windenergieanlage gemäß dem Stand der Technik, wie sie in Figur 6 schematisch dargestellt ist. Aus Übersichtsgründen ist in Fig. 6 sowie Fig. 2 eine einphasige Ersatzdarstellung gewählt. Die herkömmliche Windenergieanlage weist einen Generator 14' auf, der über eine Verbindungsleitung 16' mit einer Reaktanz 17' elektrische Leistung an eine Umrichteranlage 3' abgibt. Die Umrichteranlage 3' umfasst zwei parallel geschaltete Umrichter 30'. Jeder der beiden Umrichter 30' umfasst einen maschinenseitigen Wechselrichter 31', einen Zwischenkreis 32' sowie einen netzseitigen Wechselrichter 33'. Die beiden Umrichter 30' sind parallel geschaltet, wobei die beiden Zwischenkreise 32' miteinander verbunden sind. Die Verbindungsleitung 16' ist an die beiden maschinenseitigen Wechselrichter 31' angeschlossen. Die beiden netzseitigen Wechselrichter 33' sind ebenfalls parallel geschaltet, und sind über einen Trennschalter 34' und eine Anschlussleitung 18' verbunden mit einem Anlagentransformator 4'. Der Anlagentransformator 4' ist als ein Mittelspannungstransformator ausgebildet. Er ist in üblicher Weise über ein Massesystem 6' zur Erdung angeschlossen. Ferner umfasst er einen Hauptschalter 45' zum Anschluss an ein Netz. Bei geschirmter Ausführung weist insbesondere die Verbindungsleitung 16' eine hohe kapazitive Reaktanz 17' gegen die Schirmung auf. Es kommt dadurch zu hohen Ableitströmen I_{CM}, die über das Massesystem 6' der Windenergieanlage abgeleitet werden. Das Massesystem 6' ist dadurch im normalen Betriebszustand nicht stromlos, was unerwünscht ist (s. Stromlaufpfeile für die Ableitströme I_{CM}). Das gesamte Massesystem wird so zu einer großen, parasitären Quelle von EM-Abstrahlung.

Wie in Fig. 2 im Detail dargestellt ist, nutzt die Erfindung die Umrichteranlage 3 mit den beiden parallel angeordneten Umrichtern 30, 30* und bildet ein Strangpaar 2, das zwei Stränge 20, 20* umfasst. Jeder der beiden Stränge umfasst einen der beiden Umrichter 30 der Umrichteranlage 3 und verfügt ferner über eigene Leitungen, die an eigene Wicklungen im Transformator 4 und Generator 14 angeschlossen sind. Die Umrichter 30, 30* der Umrichteranlage 3 sind - anders als im erläuterten Stand der Technik (s. Fig. 6) - nicht über ihre Zwischenkreise verbunden, sondern sind voneinander isoliert. Die Stränge 20, 20* des Strangpaars 2 sind also vollständig voneinander getrennt.

Zwischen den beiden Strängen 20, 20* des Strangpaars 2 sind gemeinsame Masseanschlüsse 21, 22 zur Erdung vorgesehen. Am Anschluss des Anlagentransformators 4 ist der gemeinsame Masseanschluss 22 und an dem Generator 14 ist der gemeinsame Masseanschluss angeordnet. Hierüber können eventuelle Sternpunktströme abgeführt werden. Erfindungsgemäß ist das jedoch nicht erforderlich, da die jeweiligen Gleichtaktströme I_{CM} der beteiligten Umrichter 30, 30* sich ausgleichen, wie nachfolgend noch näher erläutert werden wird. Das Massesystem der Windenergieanlage bleibt somit unbelastet von Gleichtaktströmen.

Die Umrichteranlage 3 ist angesteuert von einer Umrichtersteuerung 35, die wiederum funktional mit der Betriebssteuerung 15 der Windenergieanlage zusammenwirkt. Die Umrichtersteuerung 35 ist herkömmlich aufgebaut und braucht daher nicht weiter erläutert zu werden. Sie wirkt über eine Steuerleitung auf einen der beiden Umrichter der Umrichteranlage 3, nämlich den Umrichter 30, direkt. Zusätzlich ist eine Invertiereinheit 5 vorgesehen, welche in eine Steuerleitung für den anderen Umrichter 30* eingeschleift ist. Sie ist dazu ausgebildet, das von der Umrichtersteuerung 35 über die Ansteuerleitung ausgegebene Signal zu invertieren. Damit erzeugt der so angesteuerte Umrichter 30" eine Spannung, die invers ist zu der vom Umrichter 30 erzeugten Spannung.

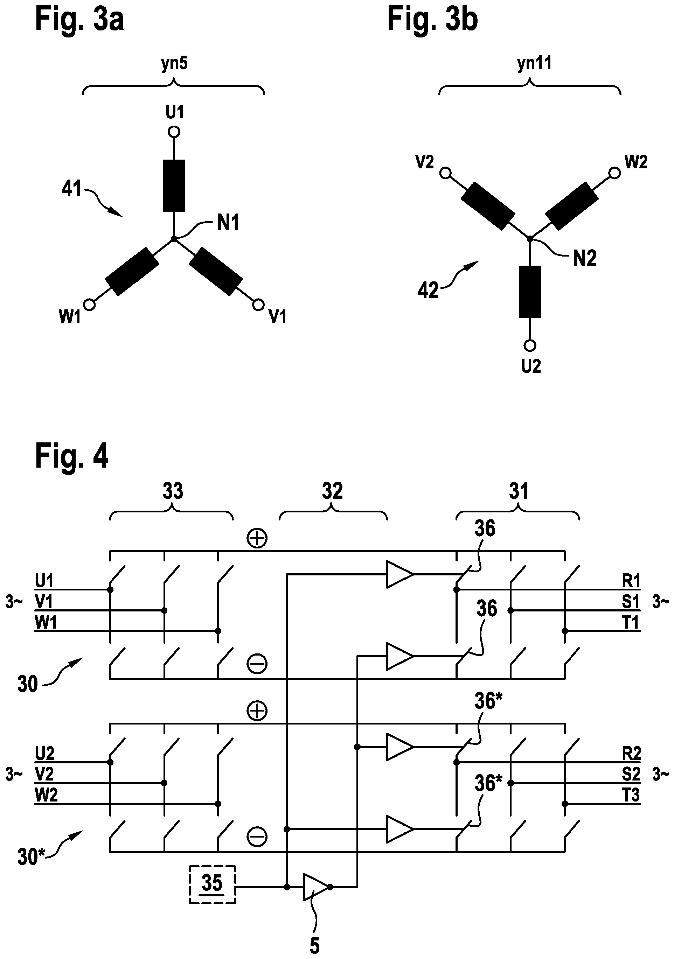

Dies sei am Beispiel der Fig. 4 näher erläutert. Sie zeigt die beiden Umrichter 30, 30* der Umrichteranlage 3 mit ihren Stromventilen 36, 36*. Die beiden Umrichter 30, 30* sind identisch aufgebaut. Aus Übersichtsgründen ist nur die Ansteuerung einer Phase ("R") des in der Darstellung rechts angeordneten Wechselrichters 31 dargestellt; die übrigen Phasen und der andere Wechselrichter 32 sind entsprechend angesteuert. In Fig. 4 ist unterhalb der beiden Umrichter die Invertiereinheit 5 dargestellt. Man erkennt, dass der untere der beiden Umrichter 30* genau invers zu dem oberen angesteuert ist: Wird im oberen Umrichter 30 die Spannung der Phase R auf den Plus-Anschluss des Zwischenkreises 32 geschaltet, wird - wegen der Invertiereinheit - synchron dazu im unteren Umrichter 30* die Spannung der Phase R auf den Minus-Anschluss des Zwischenkreises 32 geschaltet. Die Invertiereinheit 5 braucht nicht als eigenständiges Element ausgeführt sein, sondern kann in die vorhandene Umrichtersteuerung 35 integriert sein.

Der Transformator 4 ist so aufgebaut, dass er eine netzseitige Oberspannungswicklung 40 und zwei anlagenseitige Unterspannungswicklungen 41, 42 aufweist. Jede der beiden Unterspannungswicklungen 41, 42 für sich ist herkömmlich aufgebaut; in dem dargestellten Ausführungsbeispiel für ein dreiphasiges Drehstromsystem mit drei sternförmig angeordneten Phasenwicklungen. Die beiden Unterspannungswicklungen 41, 42 sind um 180° verdreht zueinander angeordnet. Damit wird eine Phasendrehung um 180° erreicht. Im Generator 14 ist entsprechendes vorgesehen. Dazu sei angemerkt, dass Generatoren häufig höhere Polpaarzahlen aufweisen und damit bereits ohnehin über die benötigten zusätzlichen Wicklungen verfügen, so dass insoweit kein Zusatzaufwand anfällt.

Insgesamt wird so erreicht, dass die durch Gleichtakt-Spannungen der Umrichteranlage 3 bewirkten Ströme I_{CM} sich gegenseitig kompensieren. Zwar entstehen wegen des taktenden Betriebs der Umrichteranlage 3 weiterhin Gleichtakt-Spannungen, aber sie entstehen erfindungsgemäß in beiden Strängen invers zueinander. Entsprechend stehen auch die Gleichtakt-Ströme invers zueinander. Das hat zur Folge, dass der in einem der beiden Stränge erzeugte Gleichtakt-Strom an den anderen der beiden Stränge abgegeben wird, d. h. nicht mehr über die Masseanschlüsse 21, 22 in das Massesystem. Das Massesystem wird damit systematisch von Gleichtakt-Strömen befreit (I=0 im Idealfall) und wirkt deshalb nicht mehr als unerwünschter Sender für EM-Strahlung.

Die Wirkung der Erfindung ist in den Fig. 5 a, b dargestellt. Sie zeigen Diagramme zu einem Gleichtaktstrom ohne und mit der erfindungsgemäßen Kompensation. In Fig. 5a ist der Gleichtaktstrom dargestellt, wie er bei einer Windenergieanlage gemäß dem Stand der Technik in das Massesystem eingespeist wird. Es treten Ströme von bis zu 200 A auf. Das ist erheblich für ein Massesystem, das an sich stromlos sein soll. Die erfindungsgemäße Verringerung zeigt Fig. 5b. Wie man erkennt, werden 10 A kaum noch überschritten. Eine (unerwünschte) Einspeisung in das Massesystem findet damit kaum noch statt. Wegen des im Grundsatz quadratischen Zusammenhangs zwischen Stromstärke und Leistung ist dank der Erfindung die für die Intensität der Abstrahlung entscheidende Leistung sogar noch stärker verringert.

## Patentansprüche

1. Windenergieanlage mit einer Umrichteranlage (3), einem Anlagentransformator (4), einem Windrotor (12) und einem damit angetriebenen Generator (14), der mit der Umrichteranlage (3) zusammenwirkt zur Erzeugung elektrischer Leistung, welche über eine Netzanschlussleitung (18) abgegeben wird, wobei ein maschinenseitiges Ende der Umrichteranlage (3) an den Generator (14) angeschlossen ist, und ein netzseitiges Ende der Umrichteranlage (3) an die Netzanschlussleitung (18) mit dem Anlagentransformator (4) angeschlossen ist, wobei die Umrichteranlage (3) mindestens zwei parallel geschaltete Umrichter (30, 30*) umfasst, die paarig zusammengeschaltet sind und von einer Umrichtersteuerung (35) angesteuert sind,
**gekennzeichnet dadurch, dass**
die parallel geschalteten Umrichter (30, 30*) jeweils in einem eigenen Strang (20, 20*) eines Strangpaars (2) angeordnet sind, und die Umrichter (30, 30*) des Strangpaars (2) mit relativ zueinander inverser Polarität angesteuert sind.

2. Windenergieanlage nach Anspruch 1, **dadurch gekennzeichnet, dass** jeder Strang (20, 20*) des Strangpaars (2) an eigene Wicklungen (41, 42) in dem Anlagentransformator (4) angeschlossen ist und vorzugsweise auch am anderen Ende an eigene Wicklungen in dem Generator (14).

3. Windenergieanlage nach Anspruch 1 oder 2, **dadurch gekennzeichnet, dass** die Umrichteranlage (3) als Vollumrichter ausgeführt ist, wobei vorzugsweise die Umrichteranlage (3) an Statorwicklungen des Generators (14) angeschlossen ist.

4. Windenergieanlage nach einem der Ansprüche 1 bis 3,
**dadurch gekennzeichnet, dass** die Umrichter (30, 30*) des Strangpaars (2) voneinander isoliert sind.

5. Windenergieanlage nach einem der Ansprüche 1 bis 3,
**dadurch gekennzeichnet, dass** Stromventile (36, 36*) der beiden Umrichter (30, 30*) synchron, aber mit inverser Polarität zwischen den beiden Umrichtern (30, 30*) angesteuert sind.

6. Windenergieanlage nach einem der Ansprüche 1 bis 4,
**dadurch gekennzeichnet, dass** eine Invertiereinheit (5) vorgesehen ist, die dazu ausgebildet ist, inverse Ansteuersignale bereitzustellen, die an nur einen der beiden Umrichter (30*) des Strangpaars (2) angelegt sind.

7. Windenergieanlage nach Anspruch 6, **dadurch gekennzeichnet, dass** die Invertiereinheit (5) in eine Umrichtersteuerung (35) integriert ist.

8. Windenergieanlage nach einem der Anspruch 1 bis 7, **dadurch gekennzeichnet, dass** die Wicklungen (42) eines Strangs (20*) des Strangpaars (2) versetzt angeordnet sind zu den Wicklungen (41) des anderen Strangs (20) dieses Strangpaars (2).

9. Windenergieanlage nach Anspruch 8, **dadurch gekennzeichnet, dass** der Anlagentransformator (4) unterspannungsseitig vom Typ yn5 und yn11 ist.

10. Windenergieanlage nach einem der vorangehenden Ansprüche, **dadurch gekennzeichnet, dass** abgeschirmte Kabel (16) zur Verbindung der Umrichter (30, 30*) mit dem Generator (14) vorgesehen sind, wobei die Umrichter (30, 30*) vorzugsweise gondelfern, insbesondere im unteren Bereich eines Turms (10) der Windenergieanlage, angeordnet sind.

11. Windenergieanlage nach Anspruch 10, **dadurch gekennzeichnet, dass** die abgeschirmten Kabel (16) durch den Turm (10) der Windenergieanlage laufen.

12. Windenergieanlage nach einem der vorangehenden Ansprüche, **dadurch gekennzeichnet, dass** zwischen den Strängen (20, 20*) Masseanschlüsse (21, 22) zur Erdung gebildet sind, vorzugsweise am Anschluss des Anlagentransformators (4) und/oder Generators (14).

13. Windenergieanlage nach einem der Ansprüche 1 bis 12,
**dadurch gekennzeichnet, dass** mehrere Strangpaare (2) vorgesehen sind.

14. Verfahren zum Betreiben einer Windenergieanlage mit einer Umrichteranlage (3), einem Anlagentransformator (4), einem Windrotor (12) und einem damit angetriebenen Generator (14), der mit der Umrichteranlage (3) zusammenwirkt zur Erzeugung elektrischer Leistung, welche über eine Netzanschlussleitung (18) abgegeben wird, wobei ein maschinenseitiges Ende der Umrichteranlage (3) an den Generator (14) angeschlossen ist, und ein netzseitiges Ende der Umrichteranlage (3) an die Netzanschlussleitung (18) mit dem Anlagentransformator (4) angeschlossen ist, wobei die Umrichteranlage (3) mindestens zwei parallel geschaltete Umrichter (30, 30*) umfasst, die paarig zusammengeschaltet sind und von einer Umrichtersteuerung (35) angesteuert werden,
**gekennzeichnet durch**
paariges Zusammenfassen von den parallel geschalteten Umrichtern (30, 30*) zu mindestens einem Strangpaar (2), und Ansteuern der Umrichter (30, 30*) des Strangpaars (2) mit inverser Polarität.

15. Verfahren nach Anspruch 14, **dadurch gekennzeichnet, dass** es nach einem der Ansprüche 1 bis 13 weitergebildet ist.

## Claims

1. Wind energy installation having a converter installation (3), an installation transformer (4), a wind rotor (12) and a generator (14) which is driven by said wind rotor and which interacts with the converter installation (3) to generate electrical power which is emitted via a grid connection line (18), wherein a machine-side end of the converter installation (3) is connected to the generator (14), and a grid-side end of the converter installation (3) is connected to the installation transformer (4) by way of the grid connection line (18), wherein the converter installation (3) comprises at least two converters (30, 30*) which are connected in parallel, are interconnected in pairs and are controlled by a converter controller (35),
**characterized in that**
the converters (30, 30*) which are connected in parallel are each arranged in a dedicated line (20, 20*) of a line pair (2), and the converters (30, 30*) of the line pair (2) are controlled with inverse polarity relative to one another.

2. Wind energy installation according to Claim 1, **characterized in that** each line (20, 20*) of the line pair (2) is connected to dedicated windings (41, 42) in the installation transformer (4) and preferably also to dedicated windings in the generator (14) at the other end.

3. Wind energy installation according to Claim 1 or 2, **characterized in that** the converter installation (3) is embodied as a full converter, wherein the converter installation (3) is preferably connected to stator windings of the generator (14).

4. Wind energy installation according to one of Claims 1 to 3, **characterized in that** the converters (30, 30*) of the line pair (2) are insulated from one another.

5. Wind energy installation according to one of Claims 1 to 3, **characterized in that** current valves (36, 36*) of the two converters (30, 30*) are controlled synchronously but with inverse polarity between the two converters (30, 30*).

6. Wind energy installation according to one of Claims 1 to 4, **characterized in that** provision is made for an inverter unit (5) which is designed to provide inverse control signals which are applied to only one of the two converters (30*) of the line pair (2).

7. Wind energy installation according to Claim 6, **characterized in that** the inverter unit (5) is integrated into a converter controller (35).

8. Wind energy installation according to one of Claims 1 to 7, **characterized in that** the windings (42) of one line (20*) of the line pair (2) are arranged offset in relation to the windings (41) of the other line (20) of this line pair (2).

9. Wind energy installation according to Claim 8, **characterized in that** the installation transformer (4) is of the yn5 and yn11 type on the low-voltage side.

10. Wind energy installation according to one of the preceding claims, **characterized in that** screened cables (16) are provided for connecting the converters (30, 30*) to the generator (14), wherein the converters (30, 30*) are preferably arranged remote from the nacelle, in particular in the lower region of a tower (10) of the wind energy installation.

11. Wind energy installation according to Claim 10, **characterized in that** the screened cables (16) run through the tower (10) of the wind energy installation.

12. Wind energy installation according to one of the preceding claims, **characterized in that** earth connections (21, 22) for earthing are formed between the lines (20, 20*), preferably at the connection of the installation transformer (4) and/or generator (14).

13. Wind energy installation according to one of Claims 1 to 12, **characterized in that** a plurality of line pairs (2) are provided.

14. Method for operating a wind energy installation having a converter installation (3), an installation transformer (4), a wind rotor (12) and a generator (14) which is driven by said wind rotor and which interacts with the converter installation (3) to generate electrical power which is emitted via a grid connection line (18), wherein a machine-side end of the converter installation (3) is connected to the generator (14), and a grid-side end of the converter installation (3) is connected to the installation transformer (4) by way of the grid connection line (18), wherein the converter installation (3) comprises at least two converters (30, 30*) which are connected in parallel, are interconnected in pairs and are controlled by a converter controller (35),
**characterized by**
the converters (30, 30*) which are connected in parallel being combined in pairs to form at least one line pair (2), and the converters (30, 30*) of the line pair (2) being controlled with inverse polarity.

15. Method according to Claim 14, **characterized in that** it is developed according to one of Claims 1 to 13.

## Revendications

1. Eolienne, comprenant une installation de convertisseur (3), un transformateur d'installation (4), un rotor éolien (12) et un générateur (14) entraîné par celui-ci et qui coopère avec l'installation de convertisseur (3) pour produire de la puissance électrique qui est délivrée par une ligne de raccordement au secteur (18), dans laquelle une extrémité côté machine de l'installation de convertisseur (3) est raccordée au générateur (14), et une extrémité côté secteur de l'installation de convertisseur (3) est raccordée à la ligne de raccordement au secteur (18) avec le transformateur d'installation (4), dans laquelle l'installation de convertisseur (3) comprend au moins deux convertisseurs connectés en parallèle (30, 30*) qui sont interconnectés par paires et sont pilotés par une commande de convertisseur (35),
**caractérisée en ce que** les convertisseurs connectés en parallèle (30, 30*) sont disposés respectivement dans leur propre branche (20, 20*) d'une paire de branches (2), et les convertisseurs (30, 30*) de la paire de branches (2) sont pilotés avec une polarité inversée l'un par rapport à l'autre.

2. Eolienne selon la revendication 1, **caractérisée en ce que** chaque branche (20, 20*) de la paire de branches (2) est raccordée à ses propres enroulements (41, 42) dans le transformateur d'installation (4), et de préférence aussi au niveau de l'autre extrémité à ses propres enroulements dans le générateur (14).

3. Eolienne selon la revendication 1 ou 2, **caractérisée en ce que** l'installation de convertisseur (3) est réalisée sous la forme d'un convertisseur intégral, dans laquelle de préférence l'installation de convertisseur (3) est raccordée à des enroulements de stator du générateur (14).

4. Eolienne selon l'une quelconque des revendications 1 à 3, **caractérisée en ce que** les convertisseurs (30, 30*) de la paire de branches (2) sont isolés l'un par rapport à l'autre.

5. Eolienne selon l'une quelconque des revendications 1 à 3, **caractérisée en ce que** des vannes de régulation (36, 36*) des deux convertisseurs (30, 30*) sont pilotées de manière synchrone mais avec une polarité inverse entre les deux convertisseurs (30, 30*).

6. Eolienne selon l'une quelconque des revendications 1 à 4, **caractérisée en ce qu'**une unité d'inversion (5) est prévue qui est réalisée pour fournir des signaux de pilotage inverses qui ne sont appliqués qu'à un seul des deux convertisseurs (30*) de la paire de branches (2).

7. Eolienne selon la revendication 6, **caractérisée en ce que** l'unité d'inversion (5) est intégrée dans une commande de convertisseur (35).

8. Eolienne selon l'une quelconque des revendications 1 à 7, **caractérisée en ce que** les enroulements (42) d'une branche (20*) de la paire de branches (2) sont disposés de manière décalée par rapport aux enroulements (41) de l'autre branche (20) de cette paire de branches (2).

9. Eolienne selon la revendication 8, **caractérisée en ce que** le transformateur d'installation (4) est de type yn5 et yn11 du côté basse tension.

10. Eolienne selon l'une quelconque des revendications précédentes, **caractérisée en ce que** des câbles blindés (16) sont prévus pour relier les convertisseurs (30, 30*) au générateur (14), dans laquelle les convertisseurs (30, 30*) sont disposés de préférence loin de la nacelle, en particulier dans la partie inférieure d'un mât (10) de l'éolienne.

11. Eolienne selon la revendication 10, **caractérisée en ce que** les câbles blindés (16) passent à travers le mât (10) de l'éolienne.

12. Eolienne selon l'une quelconque des revendications précédentes, **caractérisée en ce qu'**entre les branches (20, 20*) des bornes de masse (21, 22) sont formées pour la mise à la terre, de préférence au niveau du raccordement du transformateur d'installation (4) et/ou du générateur (14).

13. Eolienne selon l'une quelconque des revendications 1 à 12, **caractérisée en ce que** plusieurs paires de branches (2) sont prévues.

14. Procédé permettant de faire fonctionner une éolienne comprenant une installation de convertisseur (3), un transformateur d'installation (4), un rotor éolien (12) et un générateur (14) entraîné par celui-ci et qui coopère avec l'installation de convertisseur (3) pour produire de la puissance électrique qui est délivrée par une ligne de raccordement au secteur, dans lequel une extrémité côté machine de l'installation de convertisseur (3) est raccordée au générateur (14), et une extrémité côté secteur de l'installation de convertisseur (3) est raccordée à la ligne de raccordement au secteur (18) avec le transformateur d'installation (4), dans lequel l'installation de convertisseur (3) comprend au moins deux convertisseurs connectés en parallèle (30, 30*) qui sont interconnectés par paires et sont pilotés par une commande de convertisseur (35),
**caractérisé par** un regroupement par paires des convertisseurs connectés en parallèle (30, 30*) en au moins une paire de branches (2), et un pilotage des convertisseurs (30, 30*) de la paire de branches (2) à polarité inverse.

15. Procédé selon la revendication 14, **caractérisé en ce qu'**il est perfectionné selon l'une quelconque des revendications 1 à 13.
